# EUROPEAN PATENT APPLICATION

(11) **EP 4 317 928 A1**
(43) Date of publication of application: **07.02.2024**
(21) Application number: 22779342.9
(22) Date of filing: 06.01.2022
(51) Int. Cl.: G01L 3/10

(54) **TORQUE SENSOR**

(30) Priority: 31.03.2021 JP 2021060811
(71) Applicant: Nidec Copal Electronics Corporation, Shinjuku-ku Tokyo 160-0023 (JP)
(72) Inventor: HOSHINO, Keiya, Sano-shi, Tochigi 327-0104 (JP); INOGUCHI, Takatoshi, Sano-shi, Tochigi 327-0104 (JP); ENDO, Takayuki, Sano-shi, Tochigi 327-0104 (JP)
(74) Representative: Meissner Bolte Partnerschaft mbB
(86) International application number: PCT/JP2022/000185
(87) International publication number: WO 2022/209109

(57) **Abstract**

A torque sensor is capable of accurately attaching a first structure to an arm. A first structure 11 includes a first surface 11a in an annular shape, a second surface 11b in the annular shape and parallel to the first surface, a third surface 11c connecting the first surface with an outer circumference of the second surface, and a fourth surface 11d connecting the first surface with an inner circumference of the second surface. A second structure 12 is in the annular shape and concentrically arranged inside the first structure. A plurality of third structures connecting the first structure with the second structure. A plurality of strain sensors 14 are coupled between the first structure and the second structure. The first structure comprises a plurality of protrusions 11f on a part of the third surface. Each of the plurality of protrusions 11f includes an inclined part 11g becoming higher in a direction from the first surface to the second surface and a contact part 11h continuous from a vertex of the inclined part, parallel to the third surface, and in a liner shape.

## Description

### Technical Field

Embodiments described herein relate generally to a torque sensor applied to, for example, a robot arm and the like.

### Background Art

The torque sensor comprises, for example, a first structure in an annular shape, a second structure in the annular shape and arranged concentrically to the first structure, a plurality of third structures connecting the first structure with the second structure, and a strain sensor provided between the first structure and the second structure. The first structure and the second structure are attached to, for example, a joint of the robot arm and detect torque in response to movement of the arm (see, for example, Patent Literature 1).

### Citation List

### Patent Literature

Patent Literature 1: JP 2021-12024 A

### Summary of Invention

### Technical Problem

The first structure of the torque sensor is fixed to, for example, an inside of the arm in a cylindrical shape and the second structure is fixed to, for example, an output shaft of a motor provided on a base. A part of an outer side surface of the first structure is brought into contact with an inner surface of the arm in the cylindrical shape. Since a contact area between the first structure and the inner surface of the arm is small, in a case where a center of an axis of the first structure is obliquely attached to the center of the axis of the arm, an interference of the other axis that, for example, torque in a horizontal direction is affected by torque in a vertical direction occurs, and torque cannot be thereby detected accurately.

Embodiments described herein aim to provide a torque sensor capable of accurately attaching the first structure to the arm.

### Solution to Problem

A torque sensor of the present embodiment comprises a first structure including a first surface in an annular shape, a second surface in the annular shape and parallel to the first surface, a third surface connecting the first surface with an outer circumference of the second surface, and a fourth surface connecting the first surface with an inner circumference of the second surface; a second structure in the annular shape and concentrically arranged inside the first structure; a plurality of third structures connecting the first structure with the second structure; and a plurality of strain sensors connected between the first structure and the second structure, and the first structure comprises a plurality of protrusions on a part of the third surface, the plurality of protrusions including an inclined part becoming higher in a direction from the first surface to the second surface and a contact part continuous from the inclined part, parallel to the third surface, and in a liner shape.

### Brief Description of Drawings

FIG. 1 is a plan view showing a torque sensor according to the present embodiment.
FIG. 2 is a side view of FIG. 1.
FIG. 3 is an enlarged perspective view showing part A in FIG. 2.
FIG. 4 is a perspective view showing an example in which the torque sensor according to the present embodiment is attached to a robot arm, illustrating a partial cross-section.
FIG. 5 is a cross-sectional view showing part B in FIG. 4.
FIG. 6 is a cross-sectional view showing a comparative example of FIG. 5.

Mode for Carrying Out the Invention Embodiments of the present invention will be described below with reference to the accompanying drawings. In the drawings, the same parts or the parts having the same functions are denoted by the same reference numerals.

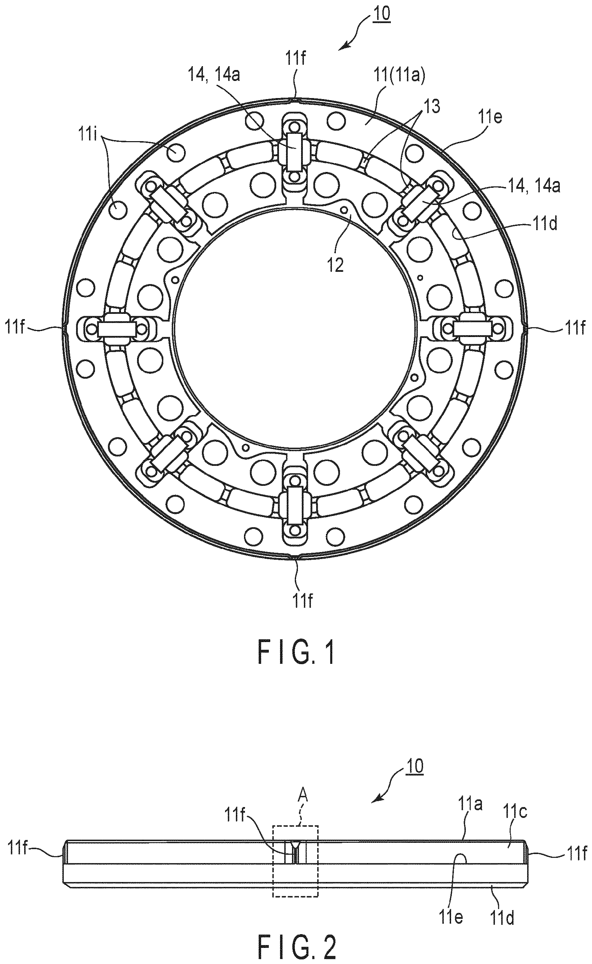

FIG. 1 and FIG. 2 show a torque sensor according to the present embodiment. A torque sensor 10 comprises a first structure 11, a second structure 12, a plurality of third structures 13, a plurality of strain sensors 14, and the like.

The first structure 11 and the second structure 12 are formed in an annular shape. The second structure 12 is arranged concentrically inside the first structure 11. The first structure 11 and the second structure 12 are connected to each other by the third structures 13 serving as a plurality of beams radially arranged. The plurality of third structures 13 transmit torque between the first structure 11 and the second structure 12.

The first structure 11, the second structure 12, and the plurality of third structures 13 are formed of a metal, for example, stainless steel, but can be formed by using materials other than metal if a mechanically sufficient strength can be obtained to the torque to be applied.

The first structure 11 and the second structure 12 have, for example, the same thickness, and a thickness of the plurality of third structures is smaller than the thickness of the first structure 11 and the second structure 12. A mechanical strength of the torque sensor 10 is set based on the thickness, a width, and a length of the third structure 13.

A plurality of strain sensors 14 are provided on positions other than the plurality of third structures, between the first structure 11 and the second structure 12. The plurality of strain sensors 14 are arranged at positions symmetrical with respect to centers of the first structure 11 and the second structure 12 (a center of action of the torque) at regular intervals. More specifically, eight strain sensors 14 in FIG. 1 are arranged on, for example, positions 45° apart from each other. The number of the strain sensors 14 is not limited to eight, but may be, for example, four, three, or two.

Each of the strain sensors 14 comprises a strain body 14a and, for example, a plurality of thin film resistors serving as strain gauges (not shown). The plurality of thin film resistors are provided on the strain body 14a. A thickness of the strain body 14a is smaller than the thickness of the third structure 13. The plurality of thin film resistors constitute a bridge circuit.

One end of the strain body 14a is fixed on the first structure 11, and the other end of the strain body 14a is fixed on the second structure 12. As a method for fixing the strain body 14a, for example, screwing, welding and bonding using an adhesive can be used. In the case of screwing, a holding member (not shown) is mounted on both ends of the strain body 14a, and fixed to the first structure 11 and the second structure 12 by fixing these holding members to the first structure 11 and the second structure 12 by screws. The strain body 14a is thus fixed on the first structure 11 and the second structure 12.

As shown in FIG. 2, the first structure 11 includes an upper surface 11a serving as a first surface, a lower surface 11b serving as a second surface parallel to the upper surface 11a, an outer side surface 11c serving as a third surface connecting the upper surface 11a with the lower surface 11b, and an inner side surface 11d (shown in FIG. 1) serving as a fourth surface connecting the upper surface 11a with the lower surface 11b.

A step part 11e is provided on an approximate center of a thickness direction of the outer side surface 11c. For this reason, a diameter of the outer side surface between the step part 11e and the upper surface 11a of the first structure 11 is smaller than the diameter of the outer side surface between the step part 11e and the lower surface 11b.

A plurality of protrusions 11f are provided on the outer side surface between the step part 11e and the upper surface 11a of the first structure 11. Each of the protrusions 11f is arranged on positions, for example, 90° apart from each other. In the present embodiment, the number of the protrusions 11f is four, but the number is not limited to four and may be three, five, six or eight.

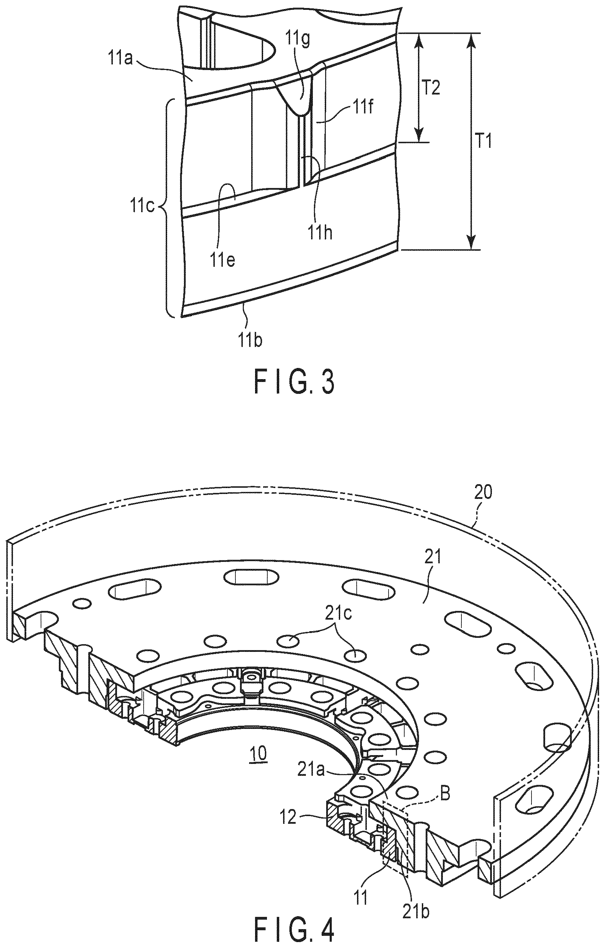

FIG. 3 shows a specific configuration of the protrusion 11f. The protrusion 11f comprises an inclined part 11g including an approximately triangular surface and a contact part 11h in a liner shape. The inclined part 11g is inclined to become higher in a direction from the upper surface 11a of the first structure 11 to the lower surface 11b of the first structure 11. A height of a vertex of the inclined part 11g is coincident with the outer side surface between the step part 11e and the lower surface 11b. The contact part 11h is continuous from the vertex of the inclined part 11g and extends to the step part 11e in the direction of the lower surface 11b. Therefore, the height of the contact part 11h is coincident with the outer side surface between the step part 11e and the lower surface 11b.

When the thickness of the first structure is denoted as T1, a length T2 of the protrusion 11f is equal to the length T2 from the upper surface 11a to the step part 11e of the first structure, and the length T2 is, for example, longer than one third of the thickness T1 of the first structure 11 and shorter than or equal to half of the thickness T1 (T1/3<T2≤T1/2).

In other words, the length T2 of the protrusion 11f is longer than or equal to one third and shorter than or equal to half of the thickness T1 of the first structure 11. In addition, the length of the contact part 11h is longer than or equal to half and shorter than or equal to two thirds of the length of the protrusion 11f.

The step part 11e is not necessarily required, and the plurality of protrusions 11f may be provided on the outer side surface 11c of the first structure 11.

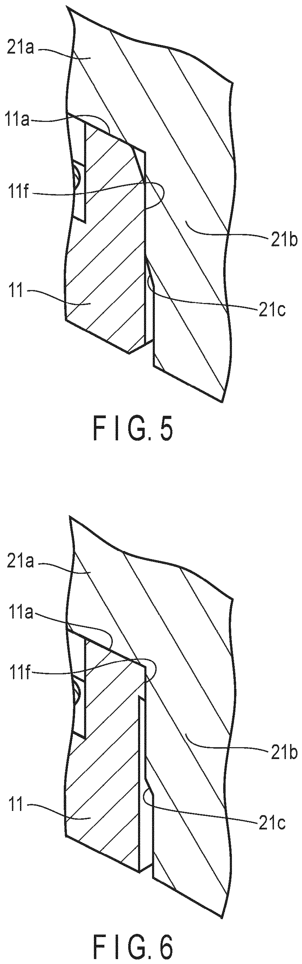

FIG. 4 shows a case where the torque sensor according to the present embodiment is attached to the robot arm, and FIG. 5 shows an enlarged view of a B part in FIG. 4.

An attachment member 21 in the annular shape is arranged inside a main body 20 in the cylindrical shape of the robot arm. The attachment member 21 comprises a fourth structure 21a in the annular shape and a fifth structure 21b in the cylindrical shape. The fourth structure 21a is parallel to the upper surface 11a of the first structure 11 of the torque sensor 10, and the fifth structure 21b in the cylindrical shape is perpendicular to the fourth structure 21a and parallel to the outer side surface 11c of the first structure 11. A diameter of an inner surface of the fifth structure 21b in the cylindrical shape is slightly larger than a diameter of the outer side surface between the plurality of protrusions 11f of the first structure and the lower surface 11b.

When the torque sensor 10 is attached to the attachment member 21, the torque sensor 10 is inserted into the fifth structure 21b in the cylindrical shape. At this time, first, the inclined part 11g provided on the protrusion 11f of the torque sensor 10 is inserted into the fifth structure 21b in the cylindrical shape, and thereafter, the contact part 11h of the protrusion 11f is inserted while being in contact with the fifth structure 21b. Further, when the torque sensor 10 is inserted into the fifth structure 21b in the cylindrical shape, the upper surface 11a of the first structure 11 is brought into contact with the fourth structure 21a of the attachment member 21, as shown in FIG. 5. In this state, screws (not shown) are respectively inserted into a plurality of holes 21c arranged in the fifth structure 21b of the attachment member 21, and screws are screwed respectively into a plurality of screw holes 11i (shown in FIG. 1) arranged in the upper surface 11a of the first structure 11. Thus, the torque sensor 10 is attached to the attachment member 21.

By providing a step 21c on the inner surface of the fifth structure 21b and a gap between the first structure 11 and the inner surface of the fifth structure 21b, the torque sensor 10 can easily be inserted into the fifth structure 21b.

### (Advantageous Effects of the Embodiment)

According to the embodiment, a torque sensor 10 comprises a plurality of protrusions 11f on an outer side surface 11c, and each of the protrusions 11f includes an inclined part 11g and the contact part 11h in the liner shape. Therefore, in a case where the torque sensor 10 is attached to a robot arm, the inclined part 11g of each protrusion 11f functions as a guide when the torque sensor 10 is inserted into the fifth structure 21b in the cylindrical shape, and the insertion is thereby facilitated.

In addition, since the contact part 11h of the protrusion 11f is in line contact with the fifth structure 21b in the cylindrical shape, the center of the axis of the first structure 11 of the torque sensor 10 can be prevented from being obliquely attached to the center of the axis of the fifth structure 21b in the cylindrical shape. Therefore, since the torque sensor 10 is accurately attached to the robot arm 20, the interference of the other axis can be prevented and a detection accuracy of torque can be improved.

Further, the length of the protrusion 11f is, for example, longer than or equal to one third and shorter than or equal to half of the thickness of the first structure 11, and the length of the contact part 11h is longer than or equal to half and shorter than or equal to two thirds of the length of the protrusion 11f. For this reason, the contact part 11h can be sufficiently brought into line contact with the fifth structure 21b in the cylindrical shape. Therefore, stability of contact can be maintained.

More specifically, similarly to a comparative example shown in FIG. 6, when the length of the protrusion 11f is short, the protrusion 11f cannot be sufficiently brought into line contact with the fifth structure 21b. Therefore, the center of the axis of the first structure 11 is obliquely attached to the fifth structure 21b in the cylindrical shape and the interference of the other axis occurs.

Further, in the present embodiment, the plurality of protrusions 11f are arranged at regular intervals around the first structure 11. Therefore, the torque sensor 10 can be prevented from being obliquely attached to the fifth structure 21b in the cylindrical shape.

The configuration of the first structure 11, the second structure 12, the plurality of third structures 13, and the plurality of strain sensors 14 in the torque sensor of the present embodiment is not limited to the configuration of the above embodiment but can be modified. More specifically, the shape of the first structure 11 and the shape of the second structure 12 are not limited to the annular shape. For example, the first structure may be a rectangular frame, the second structure may be an approximately rectangular object arranged inside the first structure, the first structure and the second structure may be connected by the plurality of third structures, and the plurality of strain sensors 14 may be connected between the first structure and the second structure. The plurality of protrusions 11f may be arranged in centers of the four sides of the first structure, respectively.

The present invention is not limited to the embodiments described above but the constituent elements of the invention can be modified in various manners without departing from the spirit and scope of the invention. Various aspects of the invention can also be extracted from any appropriate combination of a plurality of constituent elements disclosed in the embodiments. Some constituent elements may be deleted in all of the constituent elements disclosed in the embodiments. The constituent elements described in different embodiments may be combined arbitrarily.

## Claims

1. A torque sensor **characterized by** comprising:
a first structure including a first surface in an annular shape, a second surface in the annular shape and parallel to the first surface, a third surface connecting the first surface with an outer circumference of the second surface, and a fourth surface connecting the first surface with an inner circumference of the second surface;
a second structure in the annular shape and concentrically arranged inside the first structure;
a plurality of third structures connecting the first structure with the second structure; and
a plurality of strain sensors coupled between the first structure and the second structure, and
the first structure comprising a plurality of protrusions on a part of the third surface, the plurality of protrusions including an inclined part becoming higher in a direction from the first surface to the second surface and a contact part continuous from a vertex of the inclined part, parallel to the third surface, and in a liner shape.

2. The torque sensor of claim 1, **characterized in that**
a length of the plurality of protrusions is longer than or equal to one third of a thickness of the first structure and shorter than or equal to half of the thickness of the first structure.

3. The torque sensor of claim 2, **characterized in that**
the length of the contact part is longer than or equal to the length of half of the protrusion and shorter than or equal to two thirds of the length of the protrusion.

4. The torque sensor of claim 3, **characterized in that**
the plurality of protrusions are arranged at regular interval around the first structure.

5. The torque sensor of claim 4, **characterized in that**
the first structure includes a step part on the third surface,
a diameter of an outer side surface between the step part of the first structure and the first surface is smaller than the outer side surface between the step part and the second surface, and
the plurality of protrusions are arranged on the outer side surface between the step part and the first surface.
